# EUROPEAN PATENT APPLICATION

(11) **EP 1 617 636 A2**
(43) Date of publication of application: **18.01.2006**
(21) Application number: 05015215.6
(22) Date of filing: 13.07.2005
(51) Int. Cl.: H04M 1/2745

(54) **Method for executing an additional service in a wireless terminal**

(30) Priority: 13.07.2004 KR 2004054433; 31.08.2004 KR 2004069185
(71) Applicant: SAMSUNG ELECTRONICS CO., LTD., Suwon-si, Gyeonggi-do (KR)
(72) Inventor: Kim, Yun-Hyang, Yeongtong-gu Suwon-si Gyeonggi-do (KR); Lee, Moon-Heul, Yeongtong-gu Suwon-si Gyeonggi-do (KR); Park, Jeon-Man, Yeongtong-gu Suwon-si Gyeonggi-do (KR)
(74) Representative: Lang, Johannes

(57) **Abstract**

A method for executing an additional service function by means of a prefix for executing the additional service function in a wireless terminal. The method includes the steps of (1) when the prefix for executing the additional service function is input, displaying the input prefix; (2) when discrimination mode signals are input, waiting for input of a subscriber number; (3) when an abbreviated number corresponding to the subscriber number is input in step (2), combining the prefix with the subscriber number corresponding to the abbreviated number for dialing; and (4) executing a communication service according to the prefix.

## Description

### PRIORITY

This application claims the benefit under 35 U.S.C. 119(a) of an application entitled "Method for executing Additional Service in Wireless Terminal" filed in the Korean Intellectual Property Office on August 31, 2004 and assigned Serial No. 2004-69185, and an application filed in the Korean Intellectual Property Office on July 13, 2004 and assigned Serial No. 2004-54433, the entire contents of which are hereby incorporated by reference.

### BACKGROUND OF THE INVENTION

### Field of the Invention:

The present invention relates to a method for executing an additional service in a wireless terminal. More particularly, the present invention relates to a method for executing an additional service by means of a shortcut key and/or a number table corresponding to a subscriber number and/or a number table when a prefix for executing an additional service function is input.

### Description of the Related Art:

A user stores required subscriber numbers in a number table such as a phone book in a wireless terminal, and searches through the number table as the situation requires, thereby dialing subscriber numbers required by the user. Specifically, because the number table such as the phone book has a menu allowing searches by names, numbers, abbreviated numbers, voice recognition, groups, and recent outgoing/incoming/missed calls, a user can search for required subscriber numbers more conveniently and dial the searched subscriber numbers. Particularly, according to a dialing function using a number key as an abbreviated number key, in a case where the user stores required subscriber numbers in specific addresses of the number table, and inputs a number key corresponding to a number of the specific address, when the input of the number key is maintained more than a predetermined time period, the wireless terminal dials the subscriber number stored in the specific address. This dialing function using the number key as the abbreviated number key may be executed without manual input or searching of a phone number corresponding to the subscriber number. Thus, the user can conveniently search for subscriber information.

An additional service through input of a prefix may include the following case: a case where an international calling prefix, which includes an international calling business number such as '001, 002, 007 and 00755' and a country code such as '82 (Korea), 81 (Japan) and 01 (USA)', is input for an international calling; a case where a prefix such as '*79' is input for a communication service together with preset background music when communicating with a called party; a case where a prefix such as '*99' is input for an effect sound service for outputting effect sound corresponding to a predetermined key input during communication with a called party; a case where a prefix such as '*72' is input for registering an automatic connection service for continuously trying to connect to another subscriber number when the communication connection is busy; and a case where a prefix such as '*71' is input for registering a call forwarding service for forwarding a communication connection to another subscriber number regardless of the state or status of a wireless terminal. However, after the prefix for executing the additional service as described above is input, when an abbreviated number corresponding to the subscriber number is input, the wireless terminal can not recognize the input abbreviated number. Further, after the prefix is input as described above, the wireless terminal has not selected the subscriber number by means of a number table such as a phone book. Therefore, when the user performs a communication service by means of the prefix, it is inconvenient for the user to have to dial the subscriber number individually and manually.

### SUMMARY OF THE INVENTION

Accordingly, the present invention has been made to solve the above-mentioned problems occurring in the prior art, and it is an object of the present invention to provide a method for executing an additional service function by means of an abbreviated number corresponding to a subscriber number when a prefix for executing the additional service function is input.

It is another object of the present invention to provide a method for executing an additional service function by means of a number table for storing subscriber numbers when a prefix for executing the additional service function is input.

In order to accomplish the aforementioned object, according to one aspect of the present, there is provided a method for executing an additional service function by means of a prefix for executing the additional service function in a wireless terminal. The method comprises the steps of (1) when the prefix for executing the additional service function is input, displaying the input prefix; (2) when discrimination mode signals are input, waiting for input of a subscriber number; (3) when an abbreviated number corresponding to the subscriber number is input in step (2), combining the prefix with the subscriber number corresponding to the abbreviated number for dialing; and (4) executing a communication service according to the prefix.

In order to accomplish the aforementioned object, according to another aspect of the present, there is provided a method for executing an additional service function by means of a prefix for executing the additional service function in a wireless terminal. The method comprising the steps of (1) when the prefix for executing the additional service function is input, displaying the input prefix; (2) when discrimination mode signals are input, waiting for input of a subscriber number; (3) when a subscriber number table menu is input in step (2), displaying a subscriber number list; (4) when the subscriber number is selected from the displayed subscriber number list, combining the prefix with the selected subscriber number for dialing; and (5) executing a communication service according to the prefix.

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram illustrating the construction of a wireless terminal according to an embodiment of the present invention;
FIG. 2 is a flow diagram illustrating a process by which an additional service is executed by means of a prefix and a subscriber number in a wireless terminal according to an embodiment of the present invention;
FIG. 3 is a flow diagram illustrating a process by which a prefix is input in a wireless terminal according to an embodiment of the present invention;
FIG. 4 is a flow diagram illustrating a process by which a subscriber number is input in a wireless terminal according to an embodiment of the present invention;
FIG. 5 is a flow diagram illustrating a process by which an additional service is executed by means of a prefix and a subscriber number in a wireless terminal according to a second embodiment of the present invention;
FIG. 6 is a flow diagram illustrating a process by which an additional service is executed by means of a prefix and a subscriber number in a wireless terminal according to a third embodiment of the present invention;
FIG. 7 is a flow diagram illustrating a process by which an additional service is executed by means of a prefix and a subscriber number in a wireless terminal according to a fourth embodiment of the present invention; and
FIG. 8 is a flow diagram illustrating a process by which a communication service is executed by means of an international communication mode key in a wireless terminal according to an embodiment of the present invention.

Throughout the drawings, the same or similar elements are denoted by the same reference numerals.

### DETAILED DESCRIPTION OF EXEMPLARY EMBODIMENTS

Hereinafter, embodiments according to the present invention will be described with reference to the accompanying drawings. In the following description of the present invention, a detailed description of known functions and configurations incorporated herein will be omitted for conciseness.

In the following description, a prefix for executing an additional service function is a code for entering a specific service mode, and comprises a number and/or a special character. The prefix may comprise an international calling prefix comprising an international calling business number such as '001, 002, 007 and 00755' and a country code such as '82 (Korea), 81 (Japan) and 01 (USA)' for an international call, a background music service prefix such as '*79' for a communication service together with preset background music when communicating with a called party, an effect sound service prefix such as '*99' for an effect sound service for replaying effect sound corresponding to a predetermined key input during communication with a called party, an automatic connection service prefix such as '*72' for registering an automatic connection service for continuously trying to connect to another subscriber number when the communication connection is busy, and a prefix such as '*71' for registering a call forwarding service for forwarding a communication connection to another subscriber number regardless of the state or status of a wireless terminal. Further, the prefix may be input as an abbreviated number or through a number table such as a phone book. In the international calling prefix, a country code may be changed and matched according to wireless communication business numbers of portable terminals. For example, because a wireless communication number such as 010, 011, 019 and 016 is a wireless communication business number in Korea, the country code '82' of Korea is automatically matched to an international phone number.

The subscriber number refers to a phone number to be dialed in combination with the prefix in order to execute the additional service function. The subscriber number may be input as an abbreviated number or through a number table such as a phone book.

The abbreviated number represents a number corresponding to a specific address of an address book for storing subscriber numbers which a user wants to dial.

Further, a discrimination mode key discriminates the prefix from the subscriber number. The term discriminate as used herein is interchangeable with the term differentiate. When the discrimination mode key is input after input of the prefix, a wireless terminal enters a mode for waiting for input of the subscriber number. However, when the discrimination mode key is input after input of the subscriber number, a wireless terminal enters a mode for waiting for input of the prefix.

In an embodiment of the present invention, a description will be given on an assumption that abbreviated numbers corresponding to subscriber numbers are preset and the subscriber numbers are stored in the number table.

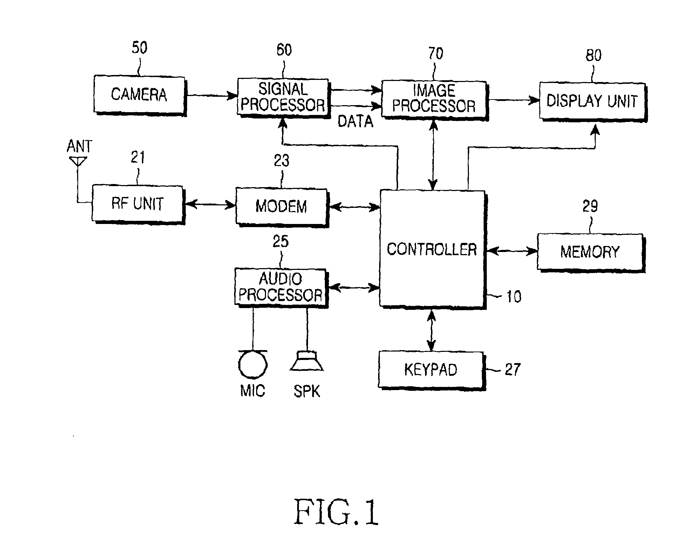

FIG. 1 is a block diagram illustrating the construction of a wireless terminal according to an embodiment of the present invention. The wireless terminal may be a mobile telephone.

Referring to FIG. 1, a Radio Frequency (RF) unit 21 performs a communication function. The RF unit 21 comprises an RF transmitter (not shown) for up-converting and amplifying the frequency of transmitted signals, a RF receiver (not shown) for low-noise amplifying received signals and downconverting the frequency of the received signals, and so on.

A modem 23 comprises a transmitter (not shown) for coding and modulating the transmitted signals, a receiver (not shown) for demodulating and decoding the received signals, and so on.

An audio processor 25 may comprise a codec. The codec comprises a data codec for processing packet data, etc., and an audio codec for processing audio signals such as voice. The audio processor 25 converts digital audio signals received through the modem 23 into analog signals through the audio codec for reproduction, or converts analog audio signals generated from a microphone into digital audio signals through the audio codec and transmits the digital audio signals to the modem 23. The codec may be integrated into or separate from the controller 10.

A keypad 27 comprises keys for inputting numerals and text information and function keys for setting various functions. The keypad 27 may comprise predetermined keys for realizing the abbreviated number and the discrimination mode and may comprise an international communication mode key according to an embodiment of the present invention. Further, the keypad 27 may comprise a prefix table menu key, a subscriber number table menu key and/or a selection key for selecting a menu.

A memory 29 may comprise a program memory and a data memory. The program memory may store programs for controlling general operations of the mobile telephone, and a program for processing an international communication service function, a background music service function, an effect sound service function, an automatic connection service registration function, and a call forwarding change service registration function according to a corresponding input prefix according to an embodiment of the present invention. Further, the memory 29 may comprise a program for detecting a prefix or a subscriber number based on names, numbers, abbreviated numbers, voices, groups, and recent outgoing/incoming/missed calls according to a menu selection when a number table menu is input.

The data memory stores the prefix or the subscriber number in the abbreviated number and/or the number table, and temporarily stores data generated during the execution of the programs.

The controller 10 performs a function of controlling general operations of the mobile telephone, which may also comprise the modem 23 and the codec. The controller 10 enters a mode for discriminating the prefix from the subscriber number when the discrimination mode key is input according to an embodiment of the present invention. Further, after the prefix is input, the controller 10 enters a mode for waiting for input of the subscriber number. After the subscriber number is input, the controller 10 enters a mode for waiting for input of the prefix. Further, when the execution key is input after the prefix is input and then the subscriber number is input or the subscriber number is input and then the prefix is input, the controller 10 detects the function of the prefix and combines the input prefix with the input subscriber number, thereby executing a communication service according to the input prefix. Furthermore, when an international communication mode key is input, the controller 10 enters an international communication mode and detects a preset international calling prefix.

A camera 50 comprises a camera sensor for photographing image data and converting photographed optical signals into electrical signals. It is assumed that the camera sensor is a Charge-Coupled Device (CCD) sensor.

A signal processor 60 converts video signals output from the camera 50 into image signals. The signal processor 60 may be realized by a Digital Signal Processor (DSP). An image processor 70 performs a function of generating screen data for displaying the image signals output from the signal processor 60.

The image processor 70 transmits the received image signals according to the standard of a display unit 80 under the control of the controller 10, and performs a function of compressing and decompressing the image data. Further, the image processor 70 transmits a start address value of the image data output to the display unit 80, or changes and transmits the start address value under the control of the controller 10.

The display unit 80 displays the image data output from the image processor 70. The display unit 80 may use a Liquid Crystal Display (LCD). In this case, the display unit 80 may comprise a LCD controller, a memory capable of storing the image data, a LCD display device, and the like. When the LCD has a touch screen function, the keypad 27 and the LCD may operate as an input unit. The display unit 80 comprises an image data display unit to which the image data are output.

Hereinafter, the operation of the mobile telephone will be described with reference to FIG. 1. when a user performs a dialing operation through the keypad 27 and sets an originating or sending mode when originating or sending a call, the controller 10 detects the originating mode, processes dialed information received through the modem 23, converts the dialed information into RF signals through the RF unit 21, and outputs the RF signals. Then, when another subscriber generates response signals, the controller 10 detects the response signals through the RF unit 21 and the modem 23. Then, a voice speech path is established through the audio processor 25, so that the controller 10 performs a communication function. Further, in a termination mode, the controller 10 detects the termination mode through the modem 23 and generates ring signals through the audio processor 25. Then, when the user responds, the controller 10 detects the response. Likewise, a voice speech path is formed through the audio processor 25, so that the controller 10 performs a communication function. In the originating mode and the termination mode, voice communication is described as an example. However, the controller 10 may also perform a data communication operation for communicating packets and image data in addition to the voice communication. Further, in a waiting mode or text communication, the controller 10 displays text data processed through the modem 23 on the display unit 80.

Hereinafter, an additional service operated in the mobile telephone will be described. When the mobile telephone user inputs a prefix by using the keypad 27, the controller 10 detects the prefix input and controls the display unit 80 to display the prefix. Further, when the mobile telephone user inputs the discrimination mode key by using the keypad 27, the controller 10 detects the discrimination mode key input and controls the memory 29 to enter a mode for discriminating the prefix and a subscriber number to be input and waits for input of the subscriber number. Then, when the user inputs the subscriber number by using the keypad 27, the controller 10 controls the display unit 80 to display the input subscriber number.

Further, when the user inputs the execution key by using the keypad 27, the controller 10 controls the memory 29 to determine functions of the input prefix, combines the input prefix with the input subscriber number, and executes the additional service.

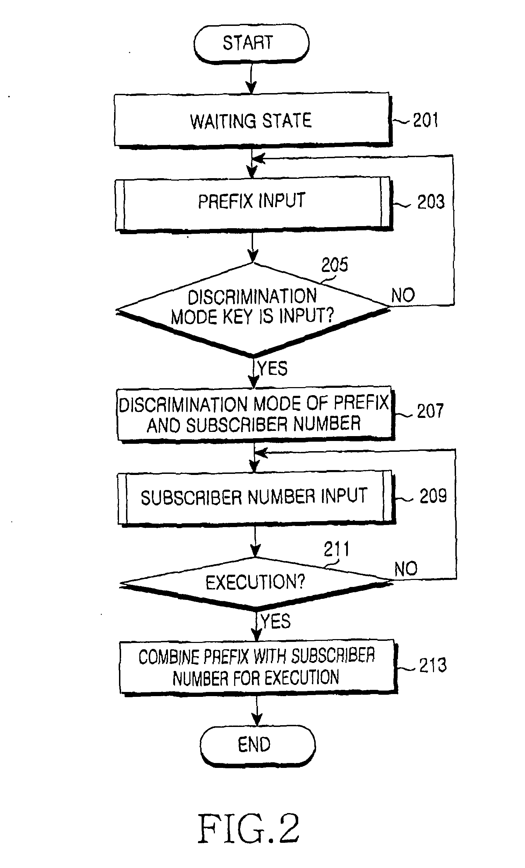

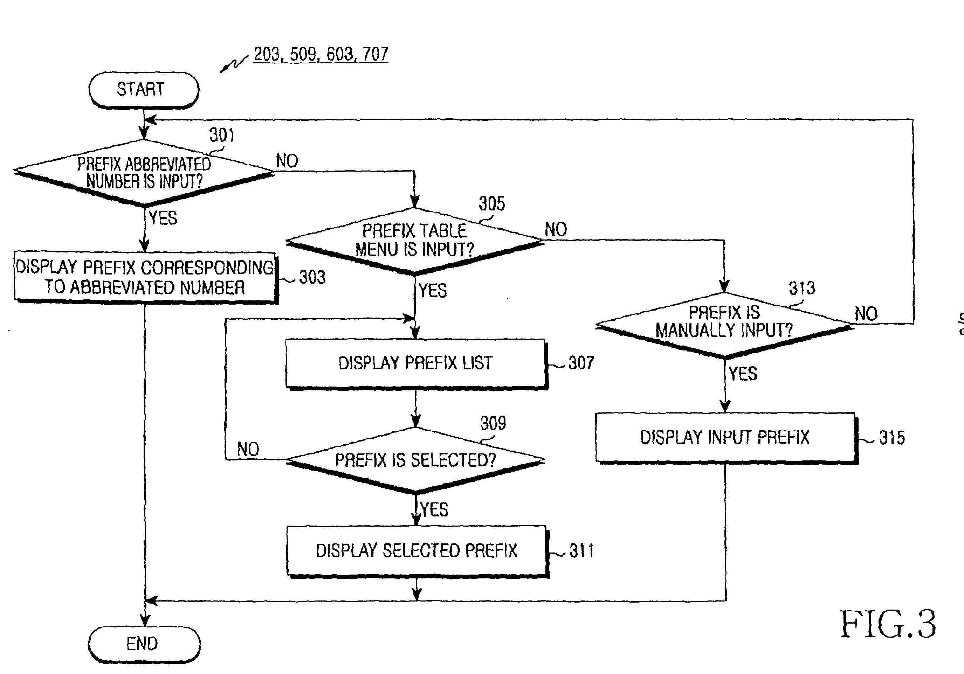

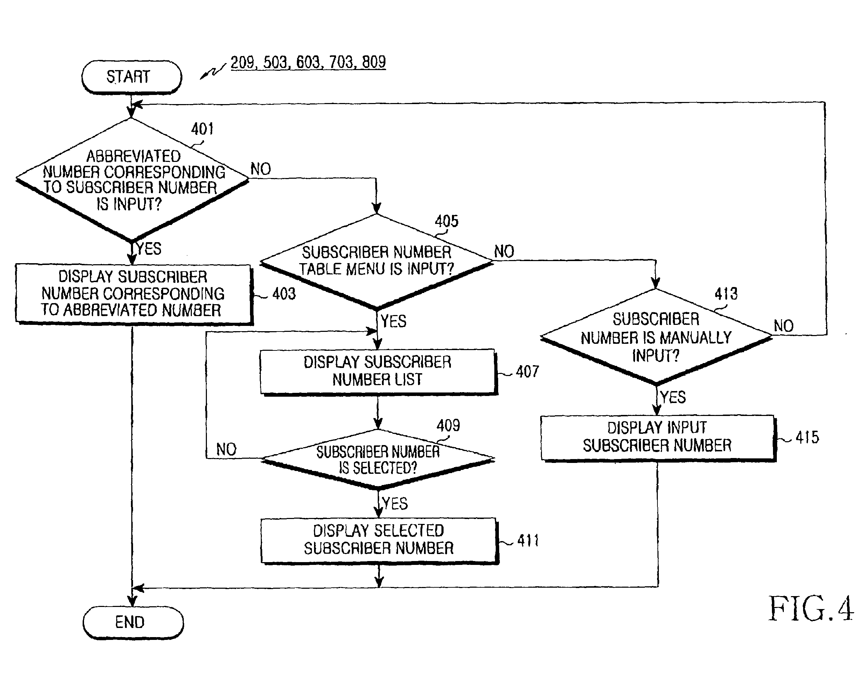

FIG. 2 is a flow diagram illustrating a process by which the additional service is executed by means of the prefix and the subscriber number in the wireless terminal according to an embodiment of the present invention, FIG. 3 is a flow diagram illustrating a process by which the prefix is input in the wireless terminal according to an embodiment of the present invention, and FIG. 4 is a flow diagram illustrating a process by which the subscriber number is input in the wireless terminal according to an embodiment of the present invention.

Hereinafter, FIG. 2 will be described with reference to FIGs. 1, 3 and 4.

In a waiting state in step 201, when a user intending to use an additional service inputs a prefix through the keypad 27 in the wireless terminal, the controller 10 detects the prefix and controls the display unit 80 to display the input prefix in step 203. Step 203 will now be described in detail with reference to FIG. 3. First, when the user inputs an abbreviated number for a prefix, for which an additional service function desired by the user has been assigned, by means of the keypad 27, the controller 10 detects the abbreviated number in step 301 and displays the prefix corresponding to the input abbreviated number in step 303. Herein, a process in which the input abbreviated number is determined as the abbreviated number of the prefix for which the additional service function has been assigned will be described. First, an input time T1 of the abbreviated number is counted. When the input time is larger than a predetermined time, the input abbreviated number is determined as the abbreviated number of the prefix for which the additional service function has been assigned. However, when the counted time T1 is less than the predetermined time, the input abbreviated number may be processed as a simple number key input. The input time T1 represents a time period for which the user continuously presses a corresponding button at one time.

Second, when the user inputs a prefix table menu by means of the keypad 27, the controller 10 detects the prefix table menu in step 305, and controls the memory 29 and the display unit 80 to read a list (prefix list) of prefixes for which additional service functions have been set, and to display the prefix list as shown in table 1, in step 307.

**Table 1**

| Number | Prefix | Function |
|---|---|---|
| 1 | 001-82 | International communication service |
| 2 | 002-82 | International communication service |
| 3 | 007-82 | International communication service |
| 4 | 00755-82 | International communication service |
| 5 | *72 | Automatic connection service |
| 6 | *71 | Call forwarding service |
| 7 | *79 | Background music service |
| 8 | *99 | Effect sound service |

Further, when the user selects the prefix of the desired additional service from the displayed prefix list, the controller 10 detects the selected prefix in step 309 and controls the memory 29 and the display unit 80 to display the selected prefix in step 311.

Third, when the user manually inputs the prefix for which the desired additional service function has been assigned, the controller 10 detects the input prefix in step 313 and controls the display unit 80 to display the input prefix in step 315.

Returning to FIG. 2, when the user inputs a discrimination mode key by means of the keypad 27, the controller 10 detects the discrimination mode key in step 205, and enters a mode for discriminating the prefix and a subscriber number and waits for input of the subscriber number in step 207. Further, when the user inputs the subscriber number to be dialed in combination with the input prefix by means of the keypad 27, the controller 10 detects the subscriber number and controls the display unit 80 to display the input subscriber number in step 209. Step 209 will now be described in detail with reference to FIG. 4. First, when the user inputs an abbreviated number corresponding to the subscriber number to be dialed in combination with the prefix by means of the keypad 27, the controller 10 detects the subscriber number in step 401 and displays the subscriber number corresponding to the input abbreviated number in step 403. Herein, a process in which the input abbreviated number is determined as the abbreviated number for which the subscriber number has been assigned will be described. First, an input time T2 of the abbreviated number is counted. When the input time is larger than a predetermined time, the input abbreviated number is determined as the abbreviated number for which the subscriber number has been assigned. However, when the counted time T2 is less than the predetermined time, the input abbreviated number may be processed as a simple number key input. The input time T2 represents a time period for which the user continuously presses a corresponding button at one time.

Second, when the user inputs a subscriber number table menu by means of the keypad 27, the controller 10 detects the subscriber number table menu in step 405, and controls the memory 29 and the display unit 80 to read and display a subscriber number list in step 407. Herein, the subscriber number table may be a phone book and may be dividedly displayed by items such as names, numbers, abbreviated numbers, groups, and recent outgoing/incoming/missed calls according to a selection of the subscriber number table menu.

Further, when the user selects the subscriber number to be dialed in combination with the input prefix from the displayed subscriber number list, the controller 10 detects the selected subscriber number in step 409, and controls the memory 29 and the display unit 80 to display the selected subscriber number in step 411.

Third, when the user manually inputs the subscriber number to be dialed in combination with the input prefix, the controller 10 detects the input subscriber number in step 413 and controls the display unit 80 to display the input subscriber number in step 415.

Referring to FIG. 2, when the user inputs an execution key by means of the keypad 27, the controller 10 detects the input execution key in step 211, and controls the memory 29 to combine the input prefix with the input subscriber number for dialing and executes a communication service according to the prefix, in step 213. For example, when the input prefix is a prefix for executing an international communication service function, which comprises an international calling business number and a country code, the controller 10 dials the input prefix and the input subscriber number, thereby executing an international communication service. Further, when the input prefix is a code for executing a background music service function, the controller 10 dials the input prefix and the input subscriber number, thereby executing a communication service together with preset background music in communication. Further, when the input prefix is a code for executing an effect sound service function, the controller 10 dials the input prefix and the input subscriber number, thereby replaying an effect sound corresponding to a predetermined key input in the course of a communication service. Further, when the input prefix is a code for registering an automatic connection service function, the controller 10 dials the input prefix and the input subscriber number, thereby registering the input subscriber number as a phone number with which communication connection will be continuously tried when the communication connection is busy. Further, when the input prefix is a code for registering a call forwarding service function, the controller 10 dials the input prefix and the input subscriber number, thereby registering the input subscriber number as a phone number with which communication connection will be tried for an incoming call.

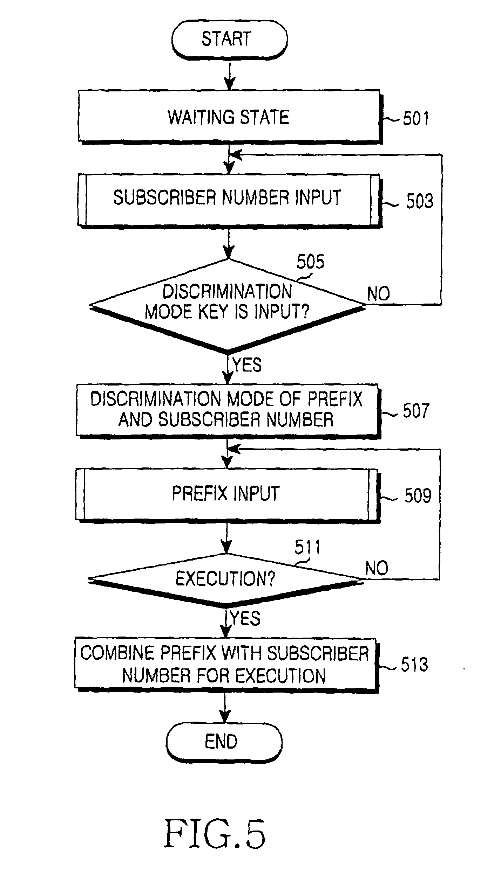

FIG. 5 is a flow diagram illustrating a process by which an additional service is executed by means of a prefix and a subscriber number in the wireless terminal according to a second embodiment of the present invention, FIG. 3 is a flow diagram illustrating a process by which the prefix is input in the wireless terminal according to an embodiment of the present invention, and FIG. 4 is a flow diagram illustrating a process by which the subscriber number is input in the wireless terminal according to an embodiment of the present invention.

Hereinafter, FIG. 5 will be described with reference to FIGs. 1, 3 and 4.

In a waiting state in step 501, when a user inputs a subscriber number through the keypad 27 in the wireless terminal, the controller 10 detects the subscriber number and controls the display unit 80 to display the input subscriber number in step 503. Step 503 will be described in detail with reference to FIG. 4. First, when the user inputs an abbreviated number corresponding to the subscriber number, which is to be dialed in combination with a prefix to be input, by means of the keypad 27, the controller 10 detects the abbreviated number in step 401 and displays the subscriber number corresponding to the input abbreviated number in step 403. Herein, a process in which the input abbreviated number is determined as the abbreviated number for which the subscriber number has been assigned will be described. First, an input time T2 of the abbreviated number is counted. When the input time is larger than a predetermined time, the input abbreviated number is determined as the abbreviated number for which the subscriber number has been assigned. However, when the counted time T2 is less than the predetermined time, the input abbreviated number may be processed as a simple number key input. The input time T2 represents a time period for which the user continuously presses a corresponding button at one time.

Second, when the user inputs a subscriber number table menu by means of the keypad 27, the controller 10 detects the subscriber number table menu in step 405, controls the memory 29 and the display unit 80 to read and display a subscriber number list in step 407. Herein, the subscriber number table may be a phone book and may be dividedly displayed by items such as names, numbers, abbreviated numbers, groups, and recent outgoing/incoming/missed calls according to a selection of the subscriber number table menu.

Further, when the user selects the subscriber number, which is to be dialed in combination with a prefix to be input, from the displayed subscriber number list, the controller 10 detects the selected subscriber number in step 409 and controls the memory 29 and the display unit 80 to display the selected subscriber number in step 411.

Third, when the user manually inputs the subscriber number to be dialed in combination with a prefix to be input, the controller 10 detects the input subscriber number in step 413 and controls the display unit 80 to display the input subscriber number in step 415.

Then, when the user inputs a discrimination mode key by means of the keypad 27, the controller 10 detects the input discrimination mode key in step 505, and enters a mode for discriminating the subscriber number from a prefix and waits for input of the prefix in step 507. Further, when the user inputs the prefix, which is to be dialed in combination with the input subscriber number, by means of the keypad 27, the controller 10 detects the prefix and controls the display unit 80 to display the input prefix in step 509. Step 509 will be described in detail with reference to FIG. 3. First, when the user inputs an abbreviated number of a prefix, for which an additional service function desired by the user has been assigned, by means of the keypad 27, the controller 10 detects the abbreviated number in step 301 and displays the prefix corresponding to the input abbreviated number in step 303. Herein, a process in which the input abbreviated number is determined as the abbreviated number of the prefix for which the additional service function has been assigned will be described. First, an input time T1 of the abbreviated number is counted. When the input time is larger than a predetermined time, the input abbreviated number is determined as the abbreviated number of the prefix for which the additional service function has been assigned. However, when the counted time T1 is less than the predetermined time, the input abbreviated number may be processed as a simple number key input. The input time T1 represents a time period for which the user continuously presses a corresponding button at one time.

Second, when the user inputs a prefix table menu by means of the keypad 27, the controller 10 detects the prefix table menu in step 305, controls the memory 29 and the display unit 80 to read and display the prefix list for which additional service functions have been set in step 307. Further, when the user selects the prefix of the desired additional service from the displayed prefix list, the controller 10 detects the selected prefix in step 309 and controls the memory 29 and the display unit 80 to display the selected prefix in step 311.

Third, when the user manually inputs the prefix, for which the desired additional service function has been assigned, the controller 10 detects the input prefix in step 313 and controls the display unit 80 to display the input prefix in step 315.

Then, when the user inputs an execution key by means of the keypad 27, the controller 10 detects the input execution key in step 511, and controls the memory 29 to combine the input prefix with the input subscriber number for dialing and executes a communication service according to the prefix, in step 513.

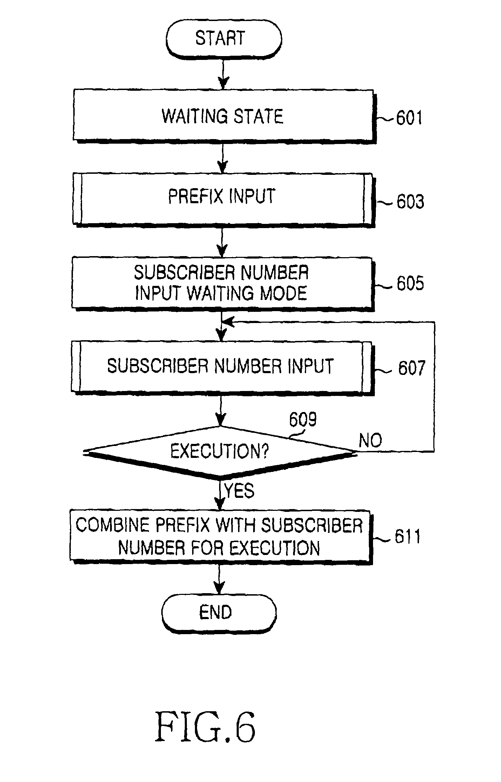

FIG. 6 is a flow diagram illustrating a process by which an additional service is executed by means of a prefix and a subscriber number in the wireless terminal according to a third embodiment of the present invention, FIG. 3 is a flow diagram illustrating a process by which the prefix is input in the wireless terminal according to the embodiment of the present invention, and FIG. 4 is a flow diagram illustrating a process by which the subscriber number is input in the wireless terminal according to an embodiment of the present invention.

Hereinafter, FIG. 6 will be described with reference to FIGs. 1, 3 and 4.

In a waiting state in step 601, when a user inputs a prefix through the keypad 27 in the wireless terminal, the controller 10 detects the prefix and controls the display unit 80 to display the input prefix in step 603. Step 603 will be described in detail with reference to FIG. 3. First, when the user inputs an abbreviated number of a prefix, for which an additional service function desired by the user has been assigned, by means of the keypad 27, the controller 10 detects the abbreviated number in step 301 and displays the prefix corresponding to the input abbreviated number in step 303. Herein, a process in which the input abbreviated number is determined as the abbreviated number of the prefix for which the additional service function has been assigned will be described. First, an input time T1 of the abbreviated number is counted. When the input time is larger than a predetermined time, the input abbreviated number is determined as the abbreviated number of the prefix for which the additional service function has been assigned. However, when the counted time T1 is less than the predetermined time, the input abbreviated number may be processed as a simple number key input. The input time T 1 represents a time period for which the user continuously presses a corresponding button at one time.

Second, when the user inputs a prefix table menu by means of the keypad 27, the controller 10 detects the prefix table menu in step 305, and controls the memory 29 and the display unit 80 to read and display the prefix list for which additional service functions have been set, in step 307. Herein, the prefix list may be displayed as a table menu which comprises an international calling prefix comprising an international calling business number such as '001, 002, 007 and 00755' and a country code such as '82 (Korea), 81 (Japan) and 01 (USA)' for an international calling, a prefix such as '*79' for a communication service together with preset background music when communicating with a called party, a prefix such as '*99' for an effect sound service for replaying the effect sound corresponding to a predetermined key input during communication with a called party, a prefix such as '*72' for registering an automatic connection service for continuously trying to connect to another subscriber number when the communication connection is busy, and a prefix such as '*71' for registering a call forwarding service for forwarding a communication connection to another subscriber number regardless of the state or status of a wireless terminal.

Further, when the user selects the prefix of the desired additional service from the displayed prefix list, the controller 10 detects the selected prefix in step 309 and controls the memory 29 and the display unit 80 to display the selected prefix in step 311.

Third, when the user manually inputs the prefix for which the desired additional service function has been assigned, the controller 10 detects the input prefix in step 313 and controls the display unit 80 to display the input prefix in step 315.

Further, after displaying the prefix, the controller 10 enters a mode for discriminating the prefix from a subscriber number and waits for input of the subscriber number in step 605.

Then, when the user inputs the subscriber number to be dialed in combination with the input prefix by means of the keypad 27, the controller 10 detects the subscriber number in step 607 and controls the display unit 80 to display the input subscriber number. Step 607 will be described in detail with reference to FIG. 4. First, when the user inputs an abbreviated number corresponding to the subscriber number to be dialed in combination with the prefix by means of the keypad 27, the controller 10 detects the subscriber number in step 401 and displays the subscriber number corresponding to the input abbreviated number in step 403. Herein, a process in which the input abbreviated number is determined as the abbreviated number for which the subscriber number has been assigned will be described. First, an input time T2 of the abbreviated number is counted. When the input time is larger than a predetermined time, the input abbreviated number is determined as the abbreviated number for which the subscriber number has been assigned. However, when the counted time T2 is less than the predetermined time, the input abbreviated number may be processed as a simple number key input. The input time T2 represents a time period for which the user continuously presses a corresponding button at one time.

Second, when the user inputs a subscriber number table menu by means of the keypad 27, the controller 10 detects the subscriber number table menu in step 405, and controls the memory 29 and the display unit 80 to read and display a subscriber number list in step 407. Herein, the subscriber number table may be a phone book and may be dividedly displayed by items such as names, numbers, abbreviated numbers, groups, and recent outgoing/incoming/missed calls according to a selection of the subscriber number table menu.

Further, when the user selects the subscriber number to be dialed in combination with the input prefix from the displayed subscriber number list, the controller 10 detects the selected subscriber number in step 409 and controls the memory 29 and the display unit 80 to display the selected subscriber number in step 411.

Third, when the user manually inputs the subscriber number to be dialed in combination with the input prefix, the controller 10 detects the input subscriber number in step 413 and controls the display unit 80 to display the input subscriber number in step 415.

Then, when the user inputs an execution key by means of the keypad 27, the controller 10 detects the input execution key in step 609, and controls the memory 29 to combine the input prefix with the input subscriber number for dialing and executes a communication service according to the prefix, in step 611. For example, when the input prefix is a prefix for executing an international communication service function, which comprises an international calling business number and a country code, the controller 10 dials the input prefix and the input subscriber number, thereby executing an international communication service. Further, when the input prefix is a code for executing a background music service function, the controller 10 dials the input prefix and the input subscriber number, thereby executing a communication service together with preset background music in communication. Further, when the input prefix is a code for executing an effect sound service function, the controller 10 dials the input prefix and the input subscriber number, thereby replaying an effect sound corresponding to a predetermined key input in the course of a communication service. Further, when the input prefix is a code for registering an automatic connection service function, the controller 10 dials the input prefix and the input subscriber number, thereby registering the input subscriber number as a phone number with which a communication connection will be continuously tried when the communication connection is busy. Further, when the input prefix is a code for registering a call forwarding service function, the controller 10 dials the input prefix and the input subscriber number, thereby registering the input subscriber number as a phone number with which communication connection will be forwarded for an incoming call.

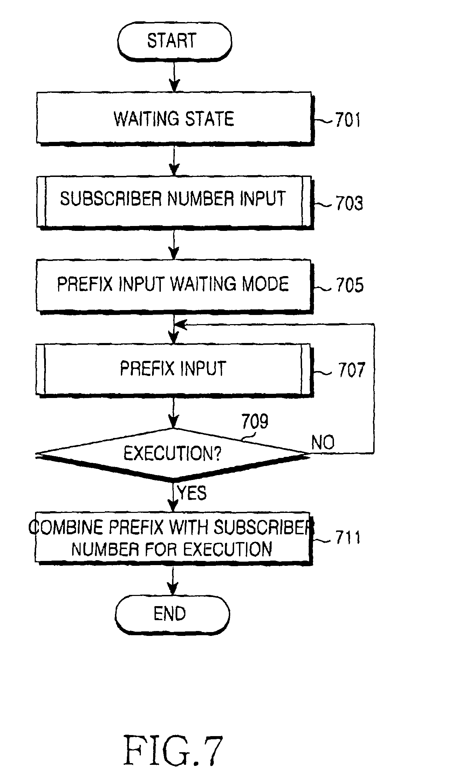

FIG. 7 is a flow diagram illustrating a process by which an additional service is executed by means of a prefix and a subscriber number in the wireless terminal according to a fourth embodiment of the present invention, FIG. 3 is a flow diagram illustrating a process by which the prefix is input in the wireless terminal according to an embodiment of the present invention, and FIG. 4 is a flow diagram illustrating a process by which the subscriber number is input in the wireless terminal according to an embodiment of the present invention.

Hereinafter, FIG. 7 will be described with reference to FIGs. 1, 3 and 4.

In a waiting state in step 701, when a user inputs a subscriber number through the keypad 27 in the wireless terminal, the controller 10 detects the subscriber number and controls the display unit 80 to display the input subscriber number in step 703. Step 703 will be described in detail with reference to FIG. 4. First, when the user inputs an abbreviated number corresponding to the subscriber number, which is to be dialed in combination with a prefix to be input, by means of the keypad 27, the controller 10 detects the abbreviated number in step 401 and displays the subscriber number corresponding to the input abbreviated number in step 403. Herein, a process in which the input abbreviated number is determined as the abbreviated number for which the subscriber number has been assigned will be described. First, an input time T2 of the abbreviated number is counted. When the input time is larger than a predetermined time, the input abbreviated number is determined as the abbreviated number for which the subscriber number has been assigned. However, when the counted time T2 is less than the predetermined time, the input abbreviated number may be processed as a simple number key input. The input time T2 represents a time period for which the user continuously presses a corresponding button at one time.

Second, when the user inputs a subscriber number table menu by means of the keypad 27, the controller 10 detects the subscriber number table menu in step 405, and controls the memory 29 and the display unit 80 to read and display a subscriber number list in step 407. Herein, the subscriber number table may be a phone book and may be dividedly displayed by items such as names, numbers, abbreviated numbers, groups, and recent outgoing/incoming/missed calls according to a selection of the subscriber number table menu.

Further, when the user selects the subscriber number, which is to be dialed in combination with a prefix to be input, from the displayed subscriber number list, the controller 10 detects the selected subscriber number in step 409 and controls the memory 29 and the display unit 80 to display the selected subscriber number in step 411.

Third, when the user manually inputs the subscriber number to be dialed in combination with a prefix to be input, the controller 10 detects the input subscriber number in step 413 and controls the display unit 80 to display the input subscriber number in step 415.

Further, after displaying the subscriber number, the controller 10 enters a mode for discriminating the subscriber number from a prefix and waits for input of the prefix in step 705.

Then, when the user inputs the prefix, which is to be dialed in combination with the input subscriber number, by means of the keypad 27, the controller 10 detects the prefix and controls the display unit 80 to display the input prefix in step 707. Step 707 will be described in detail with reference to FIG. 3. First, when the user inputs an abbreviated number of a prefix, for which an additional service function desired by the user has been assigned, by means of the keypad 27, the controller 10 detects the abbreviated number in step 301 and displays the prefix corresponding to the input abbreviated number in step 303. Herein, a process in which the input abbreviated number is determined as the abbreviated number of the prefix for which the additional service function has been assigned will be described. First, an input time T1 of the abbreviated number is counted. When the input time is larger than a predetermined time, the input abbreviated number is determined as the abbreviated number of the prefix for which the additional service function has been assigned. However, when the counted time T1 is less than the predetermined time, the input abbreviated number may be processed as a simple number key input. The input time T1 represents a time period for which the user continuously presses a corresponding button at one time.

Second, when the user inputs a prefix table menu by means of the keypad 27, the controller 10 detects the prefix table menu in step 305, and controls the memory 29 and the display unit 80 to read and display the prefix list for which additional service functions have been set, in step 307. Further, when the user selects the prefix of the desired additional service from the displayed prefix list, the controller 10 detects the selected prefix in step 309 and controls the memory 29 and the display unit 80 to display the selected prefix in step 311.

Third, when the user manually inputs the prefix, for which the desired additional service function has been assigned, the controller 10 detects the input prefix in step 313 and controls the display unit 80 to display the input prefix in step 315.

Then, when the user inputs an execution key by means of the keypad 27, the controller 10 detects the input execution key in step 709, and controls the memory 29 to combine the input prefix with the input subscriber number for dialing and executes a communication service according to the prefix, in step 711.

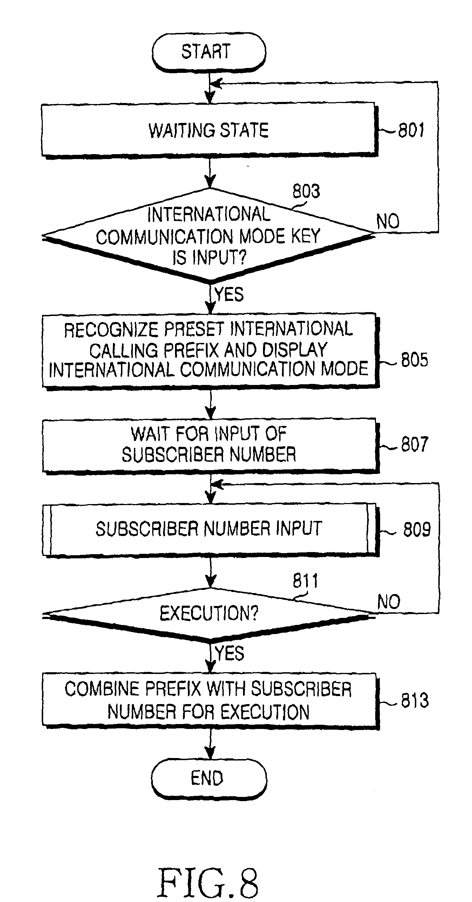

FIG. 8 is a flow diagram illustrating a process by which a communication service is executed by means of an international communication mode key in the wireless terminal according to an embodiment of the present invention, and FIG. 4 is a flow diagram illustrating a process by which the subscriber number is input in the wireless terminal according to an embodiment of the present invention.

Hereinafter, FIG. 8 will be described with reference to FIGs. 1 and 4.

In a waiting state in step 801, when a user intends to transmit data by means of international phone communication or an international phone inputs the international communication mode key through the keypad 27, the controller 10 detects the international communication mode key in step 803 and controls the memory 29 to read a predetermined international communication mode prefix in step 805. Herein, it is possible to designate and read a specific international calling prefix. Further, it is possible to set a menu, and select and read one of multiple stored international phone prefixes. A country code of the international phone prefix numbers may be changed and matched according to wireless terminal business numbers. Further, the controller 10 controls the display unit 80 to indicate that the international calling prefix has been read. Herein, the indication may be performed by a special character such as '#' and '*', a light or an icon. Further, the controller 10 enters a mode for discriminating the prefix and a subscriber number and waits for input of the subscriber number in step 807. Further, when the user inputs the subscriber number to be dialed in combination with the input international calling prefix by means of the keypad 27, the controller 10 detects the subscriber number and controls the display unit 80 to display the input subscriber number in step 809. Step 809 will be described in detail with reference to FIG. 4. First, when the user inputs an abbreviated number corresponding to the subscriber number to be dialed in combination with the international calling prefix by means of the keypad 27, the controller 10 detects the subscriber number in step 401 and displays the subscriber number corresponding to the input abbreviated number in step 403. Herein, a process in which the input abbreviated number is determined as the abbreviated number for which the subscriber number has been assigned will be described. First, an input time T2 of the abbreviated number is counted. When the input time is larger than a predetermined time, the input abbreviated number is determined as the abbreviated number for which the subscriber number has been assigned. However, when the counted time T2 is less than the predetermined time, the input abbreviated number may be processed as a simple number key input. The input time T2 represents a time period for which the user continuously presses a corresponding button at one time.

Second, when the user inputs a subscriber number table menu by means of the keypad 27, the controller 10 detects the subscriber number table menu in step 405, and controls the memory 29 and the display unit 80 to read and display a subscriber number list in step 407. Herein, the subscriber number table may be a phone book and may be dividedly displayed by items such as names, numbers, abbreviated numbers, groups, and recent outgoing/incoming/missed calls according to a selection of the subscriber number table menu.

Further, when the user selects the subscriber number to be dialed in combination with the input prefix from the displayed subscriber number list, the controller 10 detects the selected subscriber number in step 409 and controls the memory 29 and the display unit 80 to display the selected subscriber number in step 411.

Third, when the user manually inputs the subscriber number to be dialed in combination with the input prefix, the controller 10 detects the input subscriber number in step 413 and controls the display unit 80 to display the input subscriber number in step 415.

Then, when the user inputs an execution key by means of the keypad 27, the controller 10 detects the input execution key in step 811, and controls the memory 29 to combine the input prefix with the input subscriber number for dialing and executes a communication service according to the prefix, in step 813.

According to an embodiment of the present invention as described above, in executing an additional service, an input prefix and an input subscriber number are discriminated and recognized, so that the prefix and the subscriber number can be discriminated and combined even though the prefix and the subscriber number are input through a manual operation, an abbreviated number or a table menu. Therefore, the additional service can be executed. Accordingly, in the additional service using the prefix, it is possible to provide a user with convenience in which manual and individual dialing for the subscriber number is not necessary.

While the present invention has been shown and described with reference to certain embodiments thereof, it will be understood by those skilled in the art that various changes in form and details may be made therein without departing from the spirit and scope of the invention as defined by the appended claims.

## Claims

1. A method for executing an additional service function by means of a prefix for executing the additional service function in a wireless terminal, the method comprising the steps of:
(1) when an abbreviated number corresponding to the prefix is input, displaying the prefix corresponding to the abbreviated number;
(2) when discrimination mode signals are input, waiting for input of a subscriber number;
(3) when the subscriber number is input in step (2), combining the prefix with the subscriber number for dialing; and
(4) executing a communication service according to the prefix.

2. The method as claimed in claim 1, wherein the prefix comprises a business number and a country code for international phone communication.

3. The method as claimed in claim 1, wherein the prefix is a code for executing a background music service function, and a communication service is performed together with preset background music in communication in step (4).

4. The method as claimed in claim 1, wherein the prefix is a code for executing an effect sound service function, and a preset effect sound is replayed, the preset effect sound corresponding to a predetermined key input in step (4).

5. The method as claimed in claim 1, wherein the prefix is a code for registering an automatic connection service function of continuously trying to connect to the input subscriber number when the communication connection is busy, and the input subscriber number is registered as a phone number, with which communication connection will be tried when the communication connection is busy, in step (4).

6. The method as claimed in claim 1, wherein the prefix is a code for registering a call forwarding service function of forwarding a communication connection to a registered subscriber number in a terminating communication, and the input subscriber number is registered as a phone number, with which communication connection will be forwarded, in step (4).

7. A method for executing an additional service function by means of a prefix for executing the additional service function in a wireless terminal, the method comprising the steps of:
(1) when a prefix table menu for executing the additional service function is input, displaying a prefix list;
(2) when the prefix is selected from the displayed prefix list, displaying the selected prefix;
(3) when discrimination mode signals are input, waiting for input of a subscriber number;
(4) when the subscriber number is input in step (3), combining the prefix with the subscriber number for dialing; and
(5) executing a communication service according to the prefix.

8. The method as claimed in claim 7, wherein the prefix comprises a business number and a country code for international phone communication.

9. The method as claimed in claim 7, wherein the prefix is a code for executing a background music service function, and a communication service is performed together with preset background music in communication in step (5).

10. The method as claimed in claim 7, wherein the prefix is a code for executing an effect sound service function, and a preset effect sound is replayed, the preset effect sound corresponding to a predetermined key input in step (5).

11. The method as claimed in claim 7, wherein the prefix is a code for registering an automatic connection service function of continuously trying to connect to the input subscriber number when the communication connection is busy, and the input subscriber number is registered as a phone number, with which the communication connection will be tried when the communication connection is busy, in step (5).

12. The method as claimed in claim 7, wherein the prefix is a code for registering a call forwarding service function of forwarding a communication connection to a registered subscriber number in a terminating communication, and the input subscriber number is registered as a phone number, with which the communication connection will be forwarded, in step (5).

13. A method for executing an additional service function by means of a prefix for executing the additional service function in a wireless terminal, the method comprising the steps of:
(1) when the prefix for executing the additional service function is input, displaying the input prefix;
(2) when discrimination mode signals are input, waiting for input of a subscriber number;
(3) when an abbreviated number corresponding to the subscriber number is input in step (2), combining the prefix with the subscriber number corresponding to the abbreviated number for dialing; and
(4) executing a communication service according to the prefix.

14. The method as claimed in claim 13, wherein the prefix comprises a business number and a country code for international phone communication.

15. The method as claimed in claim 13, wherein the prefix is a code for executing a background music service function, and a communication service is performed together with preset background music in communication in step (4).

16. The method as claimed in claim 13, wherein the prefix is a code for executing an effect sound service function, and a preset effect sound is replayed, the preset effect sound corresponding to a predetermined key input in step (4).

17. The method as claimed in claim 13, wherein the prefix is a code for registering an automatic connection service function of continuously trying to connect to the input subscriber number when the communication connection is busy, and the input subscriber number is registered as a phone number, with which communication connection will be tried when the communication connection is busy, in step (4).

18. The method as claimed in claim 13, wherein the prefix is a code for registering a call forwarding service function of forwarding a communication connection to a registered subscriber number in a terminating communication, and the input subscriber number is registered as a phone number, with which communication connection will be forwarded, in step (4).

19. A method for executing an additional service function by means of a prefix for executing the additional service function in a wireless terminal, the method comprising the steps of:
(1) when an abbreviated number corresponding to the prefix is input, displaying a prefix corresponding to the abbreviated number;
(2) when discrimination mode signals are input, waiting for input of a subscriber number;
(3) when an abbreviated number corresponding to the subscriber number is input in step (2), combining the prefix with the subscriber number corresponding to the abbreviated number for dialing; and
(4) executing a communication service according to the prefix.

20. The method as claimed in claim 19, wherein the prefix comprises a business number and a country code for international phone communication.

21. The method as claimed in claim 19, wherein the prefix is a code for executing a background music service function, and a communication service is performed together with preset background music in communication in step (4).

22. The method as claimed in claim 19, wherein the prefix is a code for executing an effect sound service function, and a preset effect sound is replayed, the preset effect sound corresponding to a predetermined key input in step (4).

23. The method as claimed in claim 19, wherein the prefix is a code for registering an automatic connection service function of continuously trying to connect to the input subscriber number when the communication connection is busy, and the input subscriber number is registered as a phone number, with which communication connection will be tried when the communication connection is busy, in step (4).

24. The method as claimed in claim 19, wherein the prefix is a code for registering a call forwarding service function of forwarding a communication connection to a registered subscriber number in a terminating communication, and the input subscriber number is registered as a phone number, with which communication connection will be forwarded, in step (4).

25. A method for executing an additional service function by means of a prefix for executing the additional service function in a wireless terminal, the method comprising the steps of:
(1) when a prefix table menu for executing the additional service function is input, displaying a prefix list;
(2) when the prefix is selected from the displayed prefix list, displaying the selected prefix;
(3) when discrimination mode signals are input, waiting for input of a subscriber number;
(4) when an abbreviated number corresponding to the subscriber number is input in step (3), combining the prefix with the subscriber number corresponding to the abbreviated number for dialing; and
(5) executing a communication service according to the prefix.

26. The method as claimed in claim 25, wherein the prefix comprises a business number and a country code for international phone communication.

27. The method as claimed in claim 25, wherein the prefix is a code for executing a background music service function, and a communication service is performed together with preset background music in communication in step (5).

28. The method as claimed in claim 25, wherein the prefix is a code for executing an effect sound service function, and a preset effect sound is replayed, the preset effect sound corresponding to a predetermined key input in step (5).

29. The method as claimed in claim 25, wherein the prefix is a code for registering an automatic connection service function of continuously trying to connect to the input subscriber number when the communication connection is busy, and the input subscriber number is registered as a phone number, with which communication connection will be tried when the communication connection is busy, in step (5).

30. The method as claimed in claim 25, wherein the prefix is a code for registering a call forwarding service function of forwarding a communication connection to a registered subscriber number in terminating communication, and the input subscriber number is registered as a phone number, with which the communication connection will be forwarded, in step (5).

31. A method for executing an additional service function by means of a prefix for executing the additional service function in a wireless terminal, the method comprising the steps of:
(1) when the prefix for executing the additional service function is input, displaying the input prefix;
(2) when discrimination mode signals are input, waiting for input of a subscriber number;
(3) when a subscriber number table menu is input in step (2), displaying a subscriber number list;
(4) when the subscriber number is selected from the displayed subscriber number list, combining the prefix with the selected subscriber number for dialing; and
(5) executing a communication service according to the prefix.

32. A method for executing an additional service function by means of a prefix for executing the additional service function in a wireless terminal, the method comprising the steps of:
(1) when a prefix table menu for executing the additional service function is input, displaying a prefix list;
(2) when the prefix is selected from the displayed prefix list, displaying the selected prefix;
(3) when discrimination mode signals are input, waiting for input of a subscriber number;
(4) when a subscriber number table menu is input in step (3), displaying a subscriber number list;
(5) when the subscriber number is selected from the displayed subscriber number list, combining the prefix with the selected subscriber number for dialing; and
(6) executing a communication service according to the prefix.

33. A method for executing an additional service function by means of a prefix for executing the additional service function in a wireless terminal, the method comprising the steps of:
(1) when a prefix table menu for executing the additional service function is input, displaying a prefix list;
(2) when the prefix is selected from the displayed prefix list, displaying the selected prefix and waiting for input of a subscriber number;
(3) when the subscriber number is input in step (2), combining the prefix with the selected subscriber number for dialing; and
(4) executing a communication service according to the prefix.

34. The method as claimed in claim 34, wherein the prefix comprises a business number and a country code for international phone communication.

35. The method as claimed in claim 34, wherein the prefix is a code for executing a background music service function, and a communication service is performed together with preset background music in communication in step (4).

36. The method as claimed in claim 34, wherein the prefix is a code for executing an effect sound service function, and a preset effect sound is replayed, the preset effect sound corresponding to a predetermined key input in step (4).

37. The method as claimed in claim 34, wherein the prefix is a code for registering an automatic connection service function of continuously trying to connect to the input subscriber number when the communication connection is busy, and the input subscriber number is registered as a phone number, with which communication connection will be tried when the communication connection is busy, in step (4).

38. The method as claimed in claim 34, wherein the prefix is a code for registering a call forwarding service function of forwarding communication connection to a registered subscriber number in terminating communication, and the input subscriber number is registered as a phone number, with which the communication connection will be forwarded, in step (4).

39. A method for executing an additional service function by means of a prefix for executing the additional service function in a wireless terminal, the method comprising the steps of:
(1) when the prefix for executing the additional service function is input, displaying the input prefix and waiting for input of a subscriber number;
(2) when an abbreviated number corresponding to the subscriber number is input in step (1), combining the prefix with the subscriber number corresponding to the abbreviated number for dialing; and
(3) executing a communication service according to the prefix.

40. A method for executing an additional service function by means of a prefix for executing the additional service function in a wireless terminal, the method comprising the steps of:
(1) when an abbreviated number corresponding to the prefix is input, displaying the prefix corresponding to the abbreviated number and waiting for input of a subscriber number;
(2) when an abbreviated number corresponding to the subscriber number is input in step (1), combining the prefix with the subscriber number corresponding to the abbreviated number for dialing; and
(3) executing a communication service according to the prefix.

41. A method for executing an additional service function by means of a prefix for executing the additional service function in a wireless terminal, the method comprising the steps of:
(1) when a prefix table menu for executing the additional service function is input, displaying a prefix list;
(2) when the prefix is selected from the displayed prefix list, displaying the selected prefix and waiting for input of a subscriber number;
(3) when an abbreviated number corresponding to the subscriber number is input in step (2), combining the prefix with the subscriber number corresponding to the abbreviated number for dialing; and
(4) executing a communication service according to the prefix.

42. A method for executing an additional service function by means of a prefix for executing the additional service function in a wireless terminal, the method comprising the steps of:
(1) when the prefix for executing the additional service function is input, displaying the input prefix and waiting for input of a subscriber number;
(2) when a subscriber number table menu is input in step (1), displaying a subscriber number list;
(3) when the subscriber number is selected from the displayed subscriber number list, combining the prefix with the selected subscriber number for dialing; and
(4) executing a communication service according to the prefix.

43. The method as claimed in claim 43, wherein the prefix comprises a business number and a country code for international phone communication.

44. The method as claimed in claim 43, wherein the prefix is a code for executing a background music service function, and a communication service is performed together with preset background music in communication in step (4).

45. The method as claimed in claim 43, wherein the prefix is a code for executing an effect sound service function, and a preset effect sound is replayed, the preset effect sound corresponding to a predetermined key input in step (4).

46. The method as claimed in claim 43, wherein the prefix is a code for registering an automatic connection service function of continuously trying to connect to the input subscriber number when the communication connection is busy, and the input subscriber number is registered as a phone number, with which communication connection will be tried when the communication connection is busy, in step (4).

47. The method as claimed in claim 43, wherein the prefix is a code for registering a call forwarding service function of forwarding a communication connection to a registered subscriber number in terminating communication, and the input subscriber number is registered as a phone number, with which the communication connection will be forwarded, in step (4).

48. A method for executing an additional service function by means of a prefix for executing the additional service function in a wireless terminal, the method comprising the steps of:
(1) when an abbreviated number corresponding to the prefix is input, displaying the prefix corresponding to the abbreviated number and waiting for input of a subscriber number;
(2) when a subscriber number table menu is input in step (1), displaying a subscriber number list;
(3) when the subscriber number is selected from the displayed subscriber number list, combining the prefix with the selected subscriber number for dialing; and
(4) executing a communication service according to the prefix.

49. The method as claimed in claim 49, wherein the prefix comprises a business number and a country code for international phone communication.

50. The method as claimed in claim 49, wherein the prefix is a code for executing a background music service function, and a communication service is performed together with preset background music in communication in step (4).

51. The method as claimed in claim 49, wherein the prefix is a code for executing an effect sound service function, and a preset effect sound is replayed, the preset effect sound corresponding to a predetermined key input in step (4).

52. The method as claimed in claim 49, wherein the prefix is a code for registering an automatic connection service function of continuously trying to connect to the input subscriber number when the communication connection is busy, and the input subscriber number is registered as a phone number, with which communication connection will be tried when the communication connection is busy, in step (4).

53. The method as claimed in claim 49, wherein the prefix is a code for registering a call forwarding service function of forwarding a communication connection to a registered subscriber number in terminating communication, and the input subscriber number is registered as a phone number, with which the communication connection will be forwarded, in step (4).

54. A method for executing an additional service function by means of a prefix for executing the additional service function in a wireless terminal, the method comprising the steps of:
(1) when a prefix table menu for executing the additional service function is input, displaying a prefix list;
(2) when the prefix is selected from the displayed prefix list, displaying the selected prefix and waiting for input of a subscriber number;
(3) when a subscriber number table menu is input in step (2), displaying a subscriber number list;
(4) when the subscriber number is selected from the displayed subscriber number list, combining the prefix with the selected subscriber number for dialing; and
(5) executing a communication service according to the prefix.

55. The method as claimed in claim 55, wherein the prefix comprises a business number and a country code for international phone communication.

56. The method as claimed in claim 55, wherein the prefix is a code for executing a background music service function, and a communication service is performed together with preset background music in communication in step (5).

57. The method as claimed in claim 55, wherein the prefix is a code for executing an effect sound service function, and a preset effect sound is replayed, the preset effect sound corresponding to a predetermined key input in step (5).

58. The method as claimed in claim 55, wherein the prefix is a code for registering an automatic connection service function of continuously trying to connect to the input subscriber number when the communication connection is busy, and the input subscriber number is registered as a phone number, with which communication connection will be tried when the communication connection is busy, in step (5).

59. The method as claimed in claim 55, wherein the prefix is a code for registering a call forwarding service function of forwarding communication connection to a registered subscriber number in terminating communication, and the input subscriber number is registered as a phone number, with which the communication connection will be forwarded, in step (5).

60. A method for executing an international communication service function by means of a prefix for executing the international communication service function in a wireless terminal, the method comprising the steps of:
(1) when international communication service mode signals are input, recognizing the prefix for executing the international communication service function and waiting for input of a subscriber number;
(2) when a subscriber number is input in step (1), combining the prefix with the subscriber number for dialing; and
(3) executing a communication service according to the prefix.

61. The method as claimed in claim 61, further comprising a step of indicating that a current mode is an international communication service mode when the international communication service mode signals are input.

62. A method for executing an international communication service function by means of a prefix for executing the international communication service function in a wireless terminal, the method comprising the steps of:
(1) when international communication service mode signals are input, recognizing the prefix for executing the international communication service function and waiting for input of a subscriber number;
(2) when an abbreviated number corresponding to the subscriber number is input in step (1), combining the prefix with the subscriber number corresponding to the abbreviated number for dialing; and
(3) executing a communication service according to the prefix.

63. The method as claimed in claim 63, further comprising a step of indicating that a current mode is an international communication service mode when the international communication service mode signals are input.

64. A method for executing an international communication service function by means of a prefix for executing the international communication service function in a wireless terminal, the method comprising the steps of:
(1) when international communication service mode signals are input, recognizing the prefix for executing the international communication service function and waiting for input of a subscriber number;
(2) when a subscriber number menu is input in step (1), displaying a subscriber number list;
(3) when the subscriber number is selected from the displayed subscriber number list, combining the prefix with the selected subscriber number for dialing; and
(4) executing a communication service according to the prefix.

65. The method as claimed in claim 65, further comprising a step of indicating that a current mode is an international communication service mode when the international communication service mode signals are input.

66. A method for executing an additional service function by means of a prefix for executing the additional service function in a wireless terminal, the method comprising the steps of:
(1) when a subscriber number for executing the additional service function is input, displaying the input subscriber number;
(2) when discrimination mode signals are input, waiting for input of the prefix;
(3) when an abbreviated number corresponding to the prefix is input in step (2), combining the prefix corresponding to the abbreviated number with the subscriber number for dialing; and
(4) executing a communication service according to the prefix.

67. A method for executing an additional service function by means of a prefix for executing the additional service function in a wireless terminal, the method comprising the steps of:
(1) when a subscriber number for executing the additional service function is input, displaying the input subscriber number;
(2) when discrimination mode signals are input, waiting for input of the prefix;
(3) when a prefix table menu is input in step (2), displaying a prefix list;
(4) when the prefix is selected from the displayed prefix list, combining the selected prefix with the subscriber number for dialing; and
(5) executing a communication service according to the prefix.

68. A method for executing an additional service function by means of a prefix for executing the additional service function in a wireless terminal, the method comprising the steps of:
(1) when an abbreviated number corresponding to a subscriber number for executing the additional service function is input, displaying the subscriber number corresponding to the abbreviated number;
(2) when discrimination mode signals are input, waiting for input of the prefix;
(3) when the prefix is input in step (2), combining the prefix with the subscriber number for dialing; and
(4) executing a communication service according to the prefix.

69. A method for executing an additional service function by means of a prefix for executing the additional service function in a wireless terminal, the method comprising the steps of:
(1) when an abbreviated number corresponding to a subscriber number for executing the additional service function is input, displaying the subscriber number corresponding to the abbreviated number;
(2) when discrimination mode signals are input, waiting for input of the prefix;
(3) when an abbreviated number corresponding to the prefix is input in step (2), combining the prefix with the subscriber number for dialing; and
(4) executing a communication service according to the prefix.

70. A method for executing an additional service function by means of a prefix for executing the additional service function in a wireless terminal, the method comprising the steps of:
(1) when an abbreviated number corresponding to a subscriber number for executing the additional service function is input, displaying the subscriber number corresponding to the abbreviated number;
(2) when specific mode signals are input, waiting for input of the prefix;
(3) when a prefix table menu is input in step (2), displaying a prefix list;
(4) when the prefix is selected from the displayed prefix list, combining the prefix with the subscriber number for dialing; and
(5) executing a communication service according to the prefix.

71. A method for executing an additional service function by means of a prefix for executing the additional service function in a wireless terminal, the method comprising the steps of:
(1) when a subscriber number table menu for executing the additional service function is input, displaying a subscriber number list;
(2) when the subscriber number is selected from the displayed subscriber number list, displaying the selected subscriber number;
(3) when discrimination mode signals are input, waiting for input of the prefix;
(4) when the prefix is input in step (3), combining the prefix with the selected subscriber number for dialing; and
(5) executing a communication service according to the prefix.

72. A method for executing an additional service function by means of a prefix for executing the additional service function in a wireless terminal, the method comprising the steps of:
(1) when a subscriber number table menu for executing the additional service function is input, displaying a subscriber number list;
(2) when the subscriber number is selected from the displayed subscriber number list, displaying the selected subscriber number;
(3) when discrimination mode signals are input, waiting for input of the prefix;
(4) when an abbreviated number corresponding to the prefix is input in step (3), combining the prefix with the subscriber number for dialing; and
(5) executing a communication service according to the prefix.

73. A method for executing an additional service function by means of a prefix for executing the additional service function in a wireless terminal, the method comprising the steps of:
(1) when a subscriber number table menu for executing the additional service function is input, displaying a subscriber number list;
(2) when the subscriber number is selected from the displayed subscriber number list, displaying the selected subscriber number;
(3) when discrimination mode signals are input, waiting for input of the prefix;
(4) when a prefix table menu is input in step (3), displaying a prefix list;
(5) when the prefix is selected from the displayed prefix list, combining the prefix with the subscriber number for dialing; and
(6) executing a communication service according to the prefix.

74. A method for executing an additional service function by means of a prefix for executing the additional service function in a wireless terminal, the method comprising the steps of:
(1) when a subscriber number for executing the additional service function is input, displaying the input subscriber number and waiting for input of the prefix;
(2) when a prefix table menu is input in step (1), displaying a prefix list;
(3) when the prefix is selected from the displayed prefix list, combining the selected prefix with the subscriber number for dialing; and
(4) executing a communication service according to the prefix.

75. A method for executing an additional service function by means of a prefix for executing the additional service function in a wireless terminal, the method comprising the steps of:
(1) when an abbreviated number corresponding to a subscriber number for executing the additional service function is input, displaying the subscriber number corresponding to the abbreviated number and waiting for input of the prefix;
(2) when the prefix is input in step (1), combining the prefix with the subscriber number for dialing; and
(3) executing a communication service according to the prefix.

76. A method for executing an additional service function by means of a prefix for executing the additional service function in a wireless terminal, the method comprising the steps of:
(1) when an abbreviated number corresponding to a subscriber number for executing the additional service function is input, displaying the subscriber number corresponding to the abbreviated number and waiting for input of the prefix;
(2) when an abbreviated number corresponding to the prefix is input in step (1), combining the prefix with the subscriber number for dialing; and
(3) executing a communication service according to the prefix.

77. A method for executing an additional service function by means of a prefix for executing the additional service function in a wireless terminal, the method comprising the steps of:
(1) when an abbreviated number corresponding to a subscriber number for executing the additional service function is input, displaying the subscriber number corresponding to the abbreviated number and waiting for input of the prefix;
(2) when a prefix table menu is input in step (1), displaying a prefix list;
(3) when the prefix is selected from the displayed prefix list, combining the prefix with the subscriber number for dialing; and
(4) executing a communication service according to the prefix.

78. A method for executing an additional service function by means of a prefix for executing the additional service function in a wireless terminal, the method comprising the steps of:
(1) when a subscriber number table menu for executing the additional service function is input, displaying a subscriber number list;
(2) when the subscriber number is selected from the displayed subscriber number list, displaying the selected subscriber number and waiting for input of the prefix;
(3) when the prefix is input in step (2), combining the prefix with the selected subscriber number for dialing; and
(4) executing a communication service according to the prefix.

79. A method for executing an additional service function by means of a prefix for executing the additional service function in a wireless terminal, the method comprising the steps of:
(1) when a subscriber number table menu for executing the additional service function is input, displaying a subscriber number list;
(2) when the subscriber number is selected from the displayed subscriber number list, displaying the selected subscriber number and waiting for input of the prefix;
(3) when an abbreviated number corresponding to the prefix is input in step (2), combining the prefix with the subscriber number for dialing; and
(4) executing a communication service according to the prefix.

80. A method for executing an additional service function by means of a prefix for executing the additional service function in a wireless terminal, the method comprising the steps of:
(1) when a subscriber number table menu for executing the additional service function is input, displaying a subscriber number list;
(2) when the subscriber number is selected from the displayed subscriber number list, displaying the selected subscriber number and waiting for input of the prefix;
(3) when a prefix table menu is input in step (2), displaying a prefix list;
(4) when the prefix is selected from the displayed prefix list, combining the prefix with the subscriber number for dialing; and
(5) executing a communication service according to the prefix.
